# EUROPEAN PATENT APPLICATION

(11) **EP 1 860 574 A1**
(43) Date of publication of application: **28.11.2007**
(21) Application number: 05726637.1
(22) Date of filing: 17.03.2005
(51) Int. Cl.: G06F 17/30

(54) **KEYWORD MANAGING APPARATUS**

(71) Applicant: Fujitsu Ltd., Kawasaki-shi, Kanagawa 211-8588 (JP)
(72) Inventor: FUNAKI, Isao c/o FUJITSU LIMITED, Kawasaki-shi, Kanagawa 2118588 (JP)
(74) Representative: Cooper-Rolfe, Elizabeth Louise
(86) International application number: PCT/JP2005/004795
(87) International publication number: WO 2006/098031

(57) **Abstract**

In a keyword management apparatus 1 for managing a relationship among a plurality of keywords used to search a file, a keyword database 16 stores a plurality of keywords and hierarchical relationship information by defining a hierarchical relationship among the keywords. A tree creation unit 11 creates a plurality of keyword trees by utilizing the hierarchical relationship information. A designation unit 12 designates a first keyword belonging to a first keyword tree by referring to the keyword database 16. A search unit 13 searches for a second keyword, which corresponds to the first keyword and belongs to a second keyword tree, and searches for a keyword on a layer above the second keyword obtained on the basis of the hierarchical relationship information. This may be done by referring to a keyword database 16. A display unit 14 displays the search unit's 13 search results.

## Description

### Technical Field

The present invention relates to a technique for managing a keyword that is set to a file for the purpose of searching files.

### Background Art

A conventional technique that has widely been used to search for a desired file is to search a number of files within a database until the desired file is found. One method that may be used to find a file containing textual information, such as a document file, is to extract a desired file from a plurality of files using a character search. One method that that may be used to find a desired file containing non-textual information is to execute a process for searching a file by specifying one or more preset keywords, wherein the search results include files having a keyword that matches the specified keyword(s). One technique for setting up a keyword is is to set a keyword from a directory name (e.g., reference patent document 1).

The conventional technique for setting a keyword, as described above, involves individually setting a keyword for each file. With this technique, as the number of files that are managed in a database increases, so does the number of keywords that need to be set, thereby resulting in an increased workload for setting keywords. Therefore, if a plurality of keywords are set for a certain file, and a user wants to set those same keywords for another file, then the user is required to carry out the same duplicative process for sorting the keywords to the subsequent file. Furthermore, since keywords are individually set for each file, the same work must be repeated for each file in order to confirm that the keyword, has already been set. If it is desired to systematically set one or mere keywords for a plurality of files that are managed in a database, then the workload required for setting the keywords is increased and the user is left with a heavy load.

Patent document 1: Laid-Open Japanese Patent Application Publication No. 2001-28007

### Disclosure of Invention

The problem addressed by the present invention is how to provide a technique that allows a user to systematically set a keyword for a file and easily manage the set keyword.

In order to solve the problem described above, the present invention provides a keyword management apparatus for managing the relationship (s) among a plurality of keywords used to search a file. This apparatus comprises a storage unit for storing a plurality of keywords and hierarchical relationship information that is used to define hierarchical relationships among the keywords; a creation unit for creating a plurality of keyword trees by utilizing the hierarchical relationship information; a designation unit for designating a first keyword belonging to a first keyword tree by referring to a storage unit; a search unit for searching for a second keyword, corresponding to a first keyword, that belongs to a second keyword tree, and for searching for a keyword on a layer above the second keyword obtained on the basis of the hierarchical relationship information by referring to the storage unit; and a display unit for displaying the search unit's search result.

A plurality of keywords set for the purpose of searching a file comprises a keyword tree based on hierarchical relationship information possessed by each keyword. A search is carried out by a first keyword, which is designated as a search key by the designation unit, or by the first keyword, and a keyword on a Layer above the first keyword, which is obtained as a search key from the hierarchical relationship information. The search unit searches whether or not overlapping keywords exist in a keyword tree which is different from the first keyword tree the first keyword belongs to. Search results, which include a second keyword obtained via the search and a keyword on a layer above the second keyword obtained from the hierarchical relationship information, are displayed. Alternatively, one or more keywords corresponding to a plurality of keywords, which are correlated, via hierarchical relationship information, may be searched from another (i.e., a second) keyword tree.

In addition to the search result, the display unit may be configured to display a search key. When displaying a search key, a preferable configuration, may be to display each keyword tree (including the search key and/or search result) and preferably highlight the search key and keyword (s) in the search result. The hierarchical relationship information is preferably comprised of a storage location of a keyword existing on a layer directly above the existing layer e.g. , via a pointer.

Another alternative configuration may involve a keyword being set to a certain file when the file is selected from the first and/or second keyword tree and displayed by a display unit. The selected keyword and a keyword on the layer above the selected keyword which is obtained on the basis of hierarchical relationship information are set to the file.

Note that the present invention is not limited to the above described keyword management apparatus. For example, a control program to make a computer execute the above-described keyword management, a keyword management method, and such are also included within the scope of the present invention.

The present invention enables a user to systematically set a keyword by means of a keyword tree. Even if an identical keyword is included in another keyword tree, the identical keyword is searched, and the search results are displayed; thereby providing an easy way to validate the works that contain a keyword prior to seating the keyword to a file.

### Brief Description of Drawings

Fig. 1 is a block diagram of a keyword management apparatus according to the present invention;
Fig. 2 is an example of a keyword tree created by a keyword management apparatus according to the present embodiment;
Fig. 3 is a diagram describing one way of storing keyword data;
Fig. 4 is an example of a screen for starting a keyword tree edit program;
Fig. 5 is an example of a screen for setting a search-use keyword to a file;
Fig. 6 is a diagram for describing a search-use keyword being set in a file's storage area;
Fig. 7 is an example of the keyword management apparatus creating two keyword trees according to the present embodiment;
Fig. 8 is an example of a screen when a keyword edit program that comprises two keyword trees is executed;
Fig. 9 is an example of a screen when a search-use keyword that comprises two keyword trees is set;
Fig. 10 is a diagram describing an outline of a keyword management apparatus's process flow according to the present embodiment;
Fig. 11 is a flow chart of a process for setting a pointer to an upper layer keyword;
Fig. 12 is a flow chart of a process for referring to keywords on a layer above a designated keyword, and setting the keywords to files one after another;
Fig. 13 is a flow chart of a process for displaying and highlighting a keyword that is identical throughout a plurality of keyword trees;
Fig. 14 is an example of a screen displaying a search result corresponding to another search method (part 1);
Fig. 15 is an example or a screen displaying a. search result corresponding to another search method (part 2);
Fig. 16 is a configuration diagram of a keyword management apparatus's information processing apparatus, according to the present embodiment; and
Fig. 17 is a diagram describing a computer readable recording medium that enables a program and data to be supplied to an information processing apparatus.

### Best Mode for Carrying Out the Invention

The following is a detailed description of a preferred embodiment of the present invention that refers to the accompanying drawings.

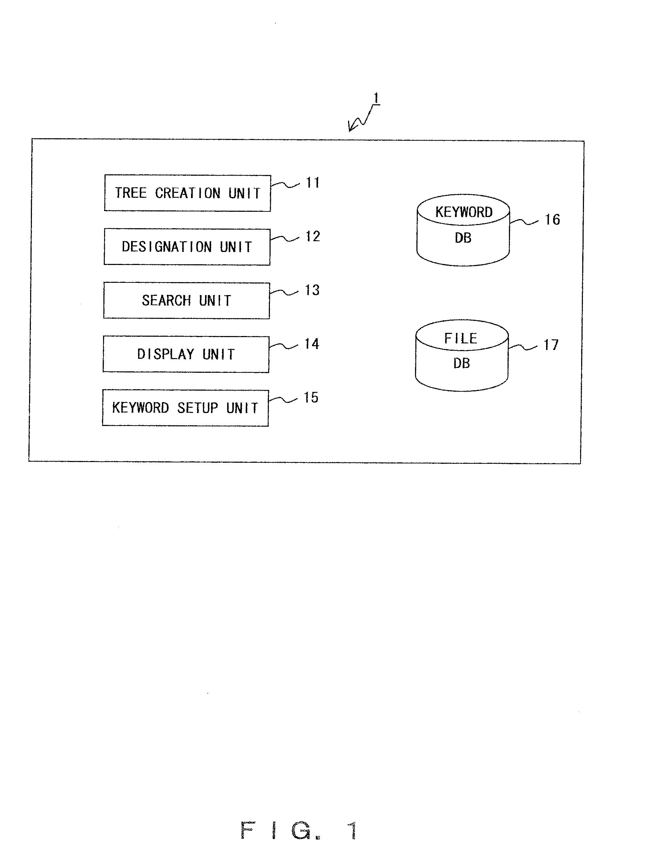

Fig. 1 is a block diagram of a keyword management apparatus 1 in accordance with the present invention. The keyword management apparatus 1 manages keyword(s) that are set to a file, for the purpose of searching a file, and comprises a tree creation unit 11, a designation unit 12, a search unit 13, a display unit 14, a keyword setup unit 15, a keyword database 16, and a file database 17.

The tree creation unit 11 creates a keyword tree having a hierarchical structure composed of a plurality of keywords. Each keyword comprises a pointer for a keyword that exists on a layer directly above the existing layer.

A designation unit 12 designates a keyword as the subject of a search based on a user's input. Based on the setup condition, a search unit 13 searches for a keyword designated by the designation unit 12. The display unit 14 displays the keyword designated by the designation unit 12 and the search results of the search unit's 13 search as the highlighted information if required, as well as displays the keyword tree.

The keyword setup unit 15 sets a keyword which is selected by the user to a certain file, referring to a keyword tree, and also sets a keyword existing on a layer above the selected keyword, when the user sets a keyword to the certain file.

The keyword database 16 and file database 17 store files such as a keyword managed on a keyword tree and an image file to which a keyword is set respectively.

According to the present invention, the keyword management apparatus 1 (shown in Fig. 1) creates a keyword tree from a plurality of keywords stored in the keyword database 16. A plurality of keywords are managed as a tree. A keyword stored in the keyword database 16 is searched by utilizing a hierarchical relationship of keywords (i.e., via a pointer) and the search result based on the hierarchical relationship is displayed. By referring to the search result, an appropriate keyword is set to a file stored on a file database 17, on the basis of the hierarchical relationship.

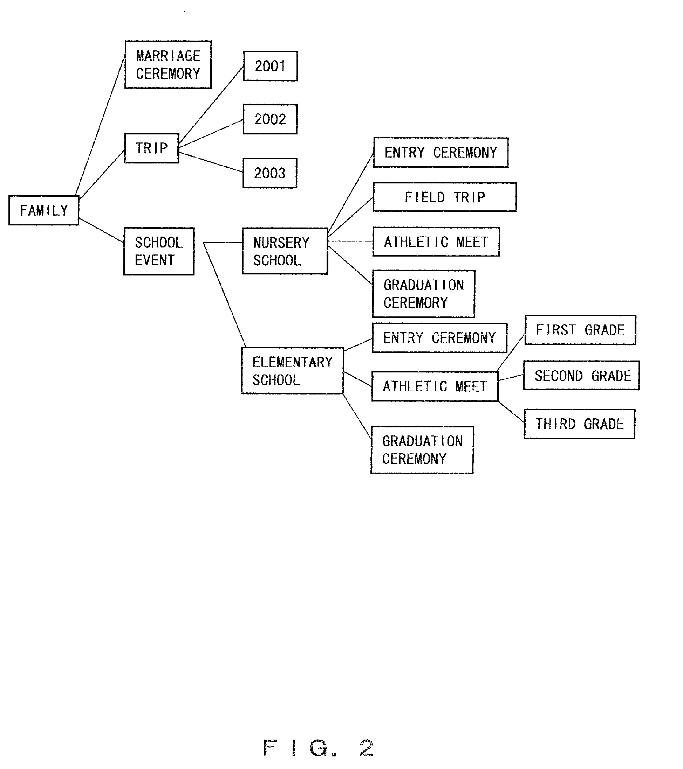

Fig. 2 is an example of a keyword tree created by a keyword management apparatus 1 according to the present embodiment. The user starts a program for creating a keyword tree via an input unit such as a keyboard, pointing device, or similar device. Utilizing the startup program creates a tree comprising a hierarchical structure, and the words are edited as keywords (see Fig. 2). A keyword tree edit program sets up keywords in a tree structure and relationships among the keywords, one after another by exchanging dialogues with the user. Generally, the lower the layer, the smaller the number of parts the created keyword tree is broken into.

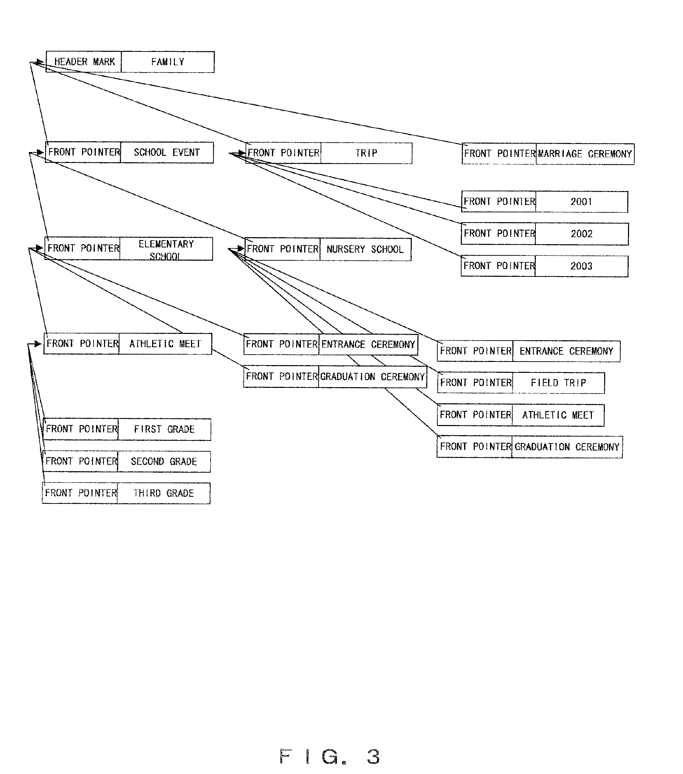

Fig. 3 is a diagram describing one way of storing keyword data. An individual keyword composing a tree which is created by the keyword tree edit program possesses a storage destination address (i.e., a pointer) of a keyword that exists on a layer directly above the existing layer of the tree, as well as information on a character string set by the user.

For example, if a user uses a monitor (or other output unit) to designate a certain piece of keyword data from within the keyword tree, the keyword management apparatus 1 refers to a pointer possessed by the designated keyword and extracts keyword data on a layer directly above the existing layer. If the extracted keyword is set to an even higher layer of the extracted keyword data, then a pointer is also possessed, Therefore a sequential tracing of pointers makes it possible to uniquely trace a keyword back to the root of the present Keyword tree.

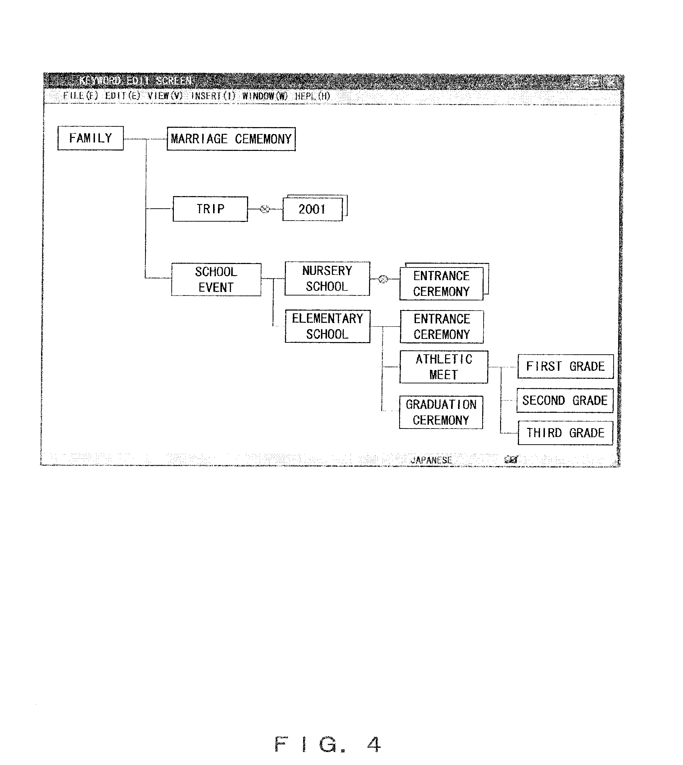

Fig. 4 is one example of a start-up screen of the above described keyword tree edit program. The user presets keyword(s) that are set to a file in a tree structure via the screen shown in Fig. 4. The example in Fig. 4 illustrates the addition of the keyword "field trip" under the "elementary school" keyword in the keyword tree. Thus, a relationship is created between the "elementary school" keyword, which has already been set as a keyword in the keyword tree via this screen, and the newly added "field trip" keyword. The relationship results in storing the address of the "elementary school" keyword data as a pointer in the "field trip" keyword data.

According to the present embodiment, the keyword management apparatus 1 is configured to set a prescribed keyword to a file for a search, among a plurality of keywords within a keyword tree, by using a keyword tree created by the keyword tree edit program. The setup of a search-use keyword to a file is achieved by the execution of a keyword setup program via a user issued command.

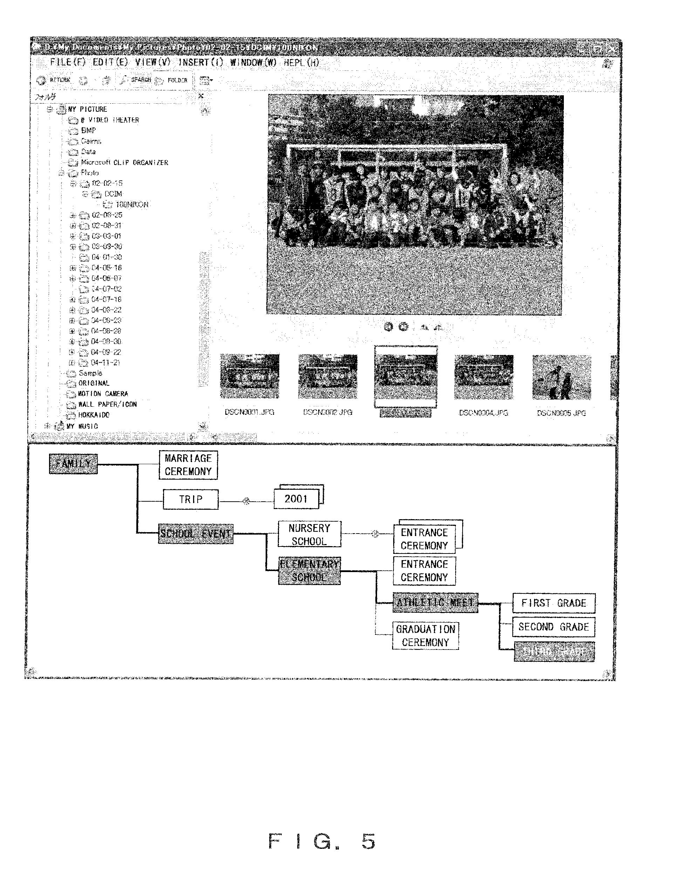

Fig. 5 is an example of a screen for setting a search-use keyword to a file when executing the keyword setup program. The user selects a file which is to be set a search-use keyword and a desired keyword from a pre-created keyword tree via a screen (see Fig. 5.) In the example in Fig. 5, a file named "DSCN0003. JPG" is selected as a file to be set a search-use keyword, and displayed highlighted, from a catalog of image files on the upper side of the window. If the keyword "third grade" which is positioned on the lowest layer is selected from the set of keywords to be set, then the pointer the keyword data is referred to and the keywords on the layers above this, i.e., "athletic meet", "elementary school", "school event" and "family" are traced back one after another. These keywords are displayed and highlighted, for example. Therefore, the user looks at the screen, confirm the name and contents of the file, and displayed and highlighted keywords. Following a command input or such, by the user, the keyword management apparatus 1 is prompted to set the displayed and highlighted keywords as search-use keywords in the file's keyword storage area.

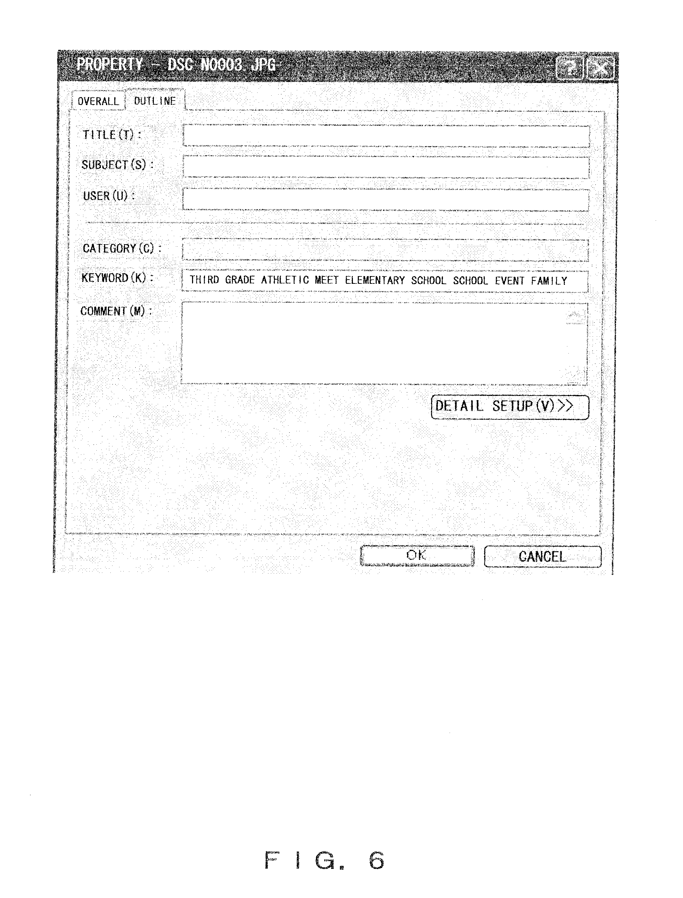

Fig. 6 is a diagram that describes a search-use keyword being set in a file storage area. The window shown in Fig. 6 is output when a command is inputted to make the screen display attribute information (i.e., a property) of an image file, for example. The window in Fig. 6 illustrates the selected keyword "third grade", which was selected by the user in Fig. 5 and all of the keywords existing on layers above the selected keyword in the keyword tree, i.e., "athletic meet", "elementary school", "school event" and "family", are all set to the storage area, (). Therefore, if either keyword of a plurality of set keywords is input for searching the "DSCN0003. JPG" image file which the keyword has been set in Fig. 5, the file is returned as a search result hit. For example, the user is able to obtain a desired search result by generally guessing and setting a search-use keyword by referring to the keyword tree and re-setting a keyword on the layers above or below on the basis of the search result.

According to the present embodiment, as described in Figs. 2 through 6, the keyword management apparatus 1 is configured to create a keyword tree comprising a plurality of search-use keywords in advance. When a desired keyword is selected from the keywords in the keyword tree, keyword whose layer is higher than the selected keyword are automatically set as a search-use keyword. Managing of a plurality of search-use keywords using a tree makes it possible to set a keyword systematically and easily to a large number of files.

A keyword, composing a keyword tree, may be changed (i. e., added or deleted) by the keyword tree edit program, after a search-use keyword has been set to the file based on the keyword tree. When making a change, the configuration may re-set the keyword(s) associated with the change to related file(s). An alternative configuration may enable the user to select whether or not to carry out the process for re-setting keyword(s) in related file(s).

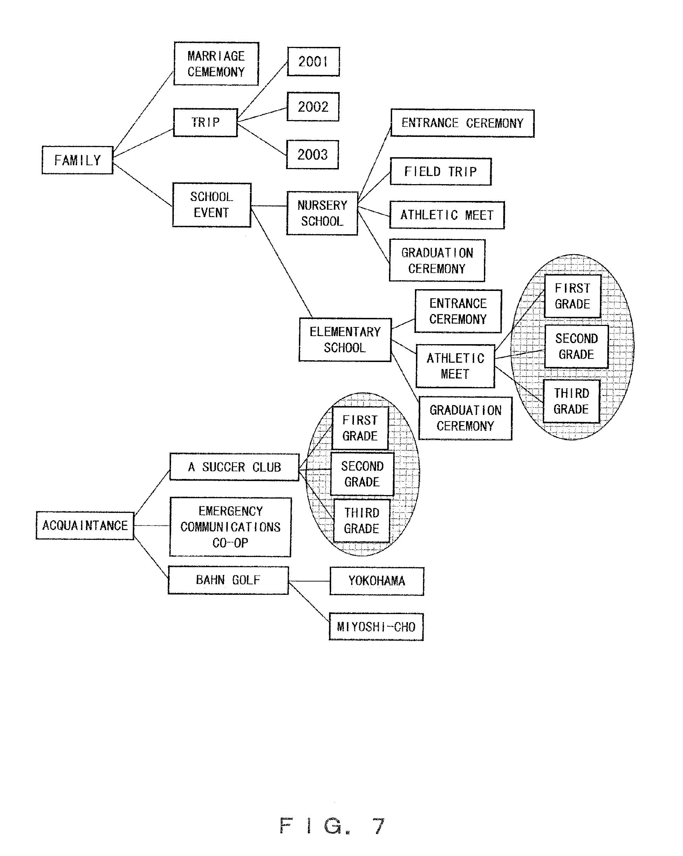

The keyword management apparatus 1 according to the present embodiment is configured to manage a plurality of keyword trees. Fig. 7 is an example of two keyword trees created by the keyword management apparatus 1 in according to the present embodiment. Next is a description of an embodiment comprising a plurality of keyword trees, which are exemplified in an example comprising two keyword trees.

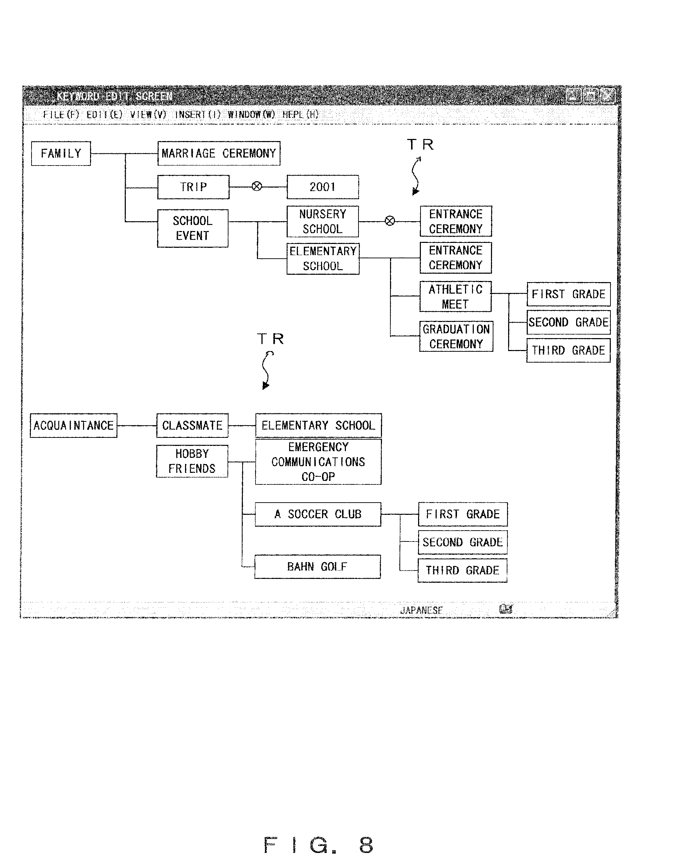

Fig. 8 is an example of a screen when a keyword edit program is executed comprising two keyword trees. The root keywords are "family" and "acquaintance" in Fig. 8. In the following description, the keyword tree having the root "family" is named as TR1, and the one having the root "acquaintance" is named as TR2. Each of the trees comprises a hierarchical structure, with a plurality of keywords being set under the root. The overlaping keywords are partially set.

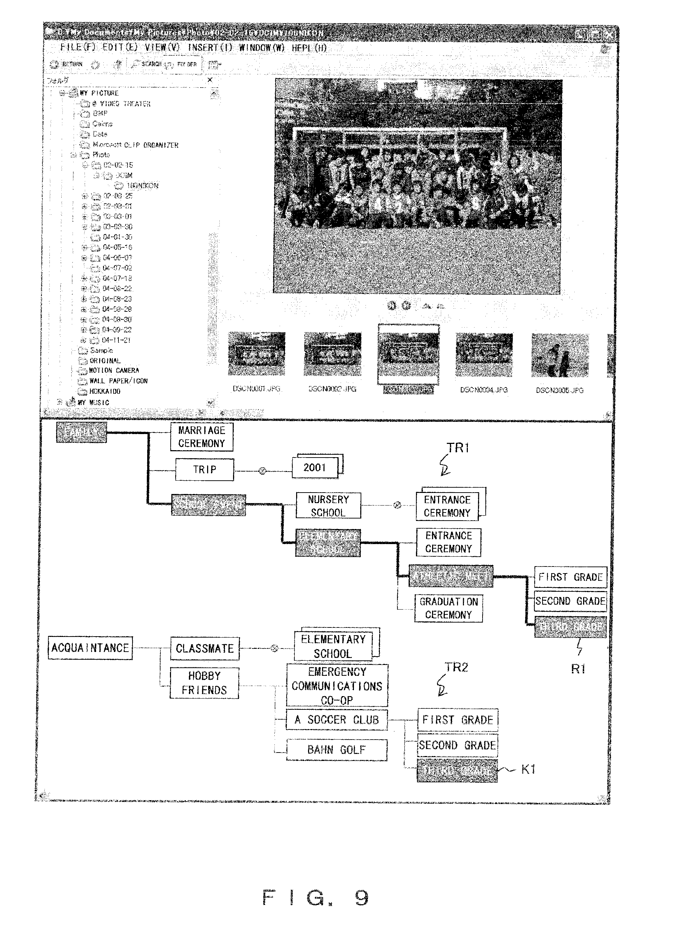

According to the present embodiment, Fig. 9 is an example of a screen of setting a search-use keyword to a file by a keyword setup program when the keyword management apparatus 1 according to the present embodiment comprises of two keyword trees. Here, it is desirable to be able to confirm whether or not an appropriate keyword has been selected as a search-use keyword, before setting it as attribute information in the selected file. The present embodiment is configured to judge whether or not a keyword, which has been selected from a certain keyword tree (see Fig. 9), is identical to a keyword that is included in another keyword tree.

For example, in Fig. 9, assume that the keyword "third grade" (the "third grade" that is located under the keyword "A soccer club") is selected in TR2 by a user. The selected keyword is then used as a search key K1, wherein a keyword that is identical to "third grade" is searched for in TR1, and any hit keyword (s) (such as keyword R1 and keyword(s) in the layer(s) above the hit keyword that are related to the hit keyword) are displayed and highlighted. This configuration enables the user to validate whether or not the search key K1 (i.e., "third grade") in the selected keyword tree (i.e., the TR2 tree) is a good keyword that is intended to be set to the file.

Note that Fig. 9 shows only one keyword hit as a result of the search, whereas, if two or more keywords are hit by the search then all of the keywords that match the search key K1 (and keywords existing on layers above the hit keywords that are correlated with the hit keywords) are displayed and highlighted. An alternative configuration may display all of the keyword trees including a hit keyword as a search result, or only search the keyword trees designated by the user.

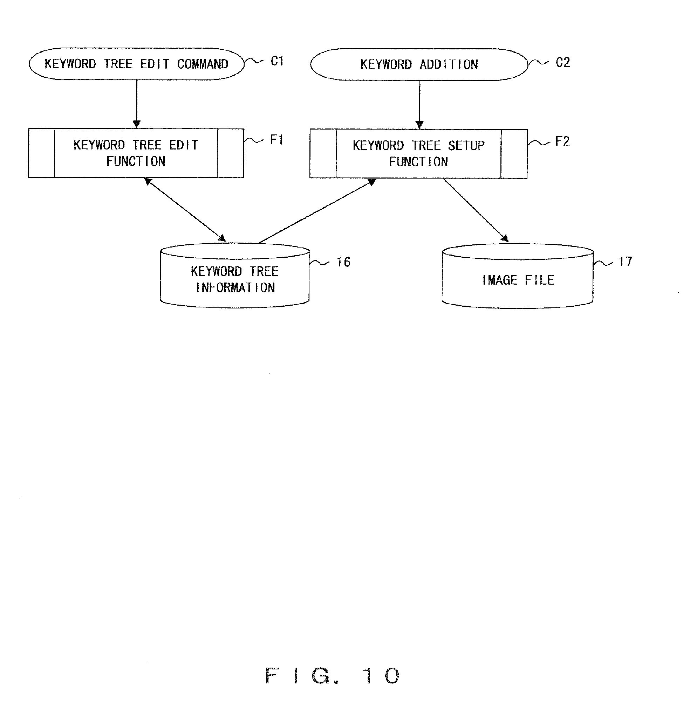

Described above is an outline of the keyword management apparatus' s 1 operations and data structures, in accordance with the present embodiment. Described below is a more detailed description of the process method referenced by Figs. 10 through 13.

Fig. 10 is a diagram describing an outline of a keyword management apparatus's 1 process flow in accordance with the present embodiment. First, a keyword tree edit function (i.e., a program) F1 is executed when an edit command C1 for a keyword tree is received from the user. Each piece of keyword data contained in a tree which is created by the keyword tree edit function F1 is stored along with a pointer in the keyword database 16 (i.e., a keyword tree information database). In order to set a search-use keyword to a file, when a keyword addition command C2 is received, a keyword setup function (i.e., a program) F2 is executed by using data in the keyword database 16. For example, a file such as an image file which stores search-use keyword (s) as attribute information is stored in the image file database 17.

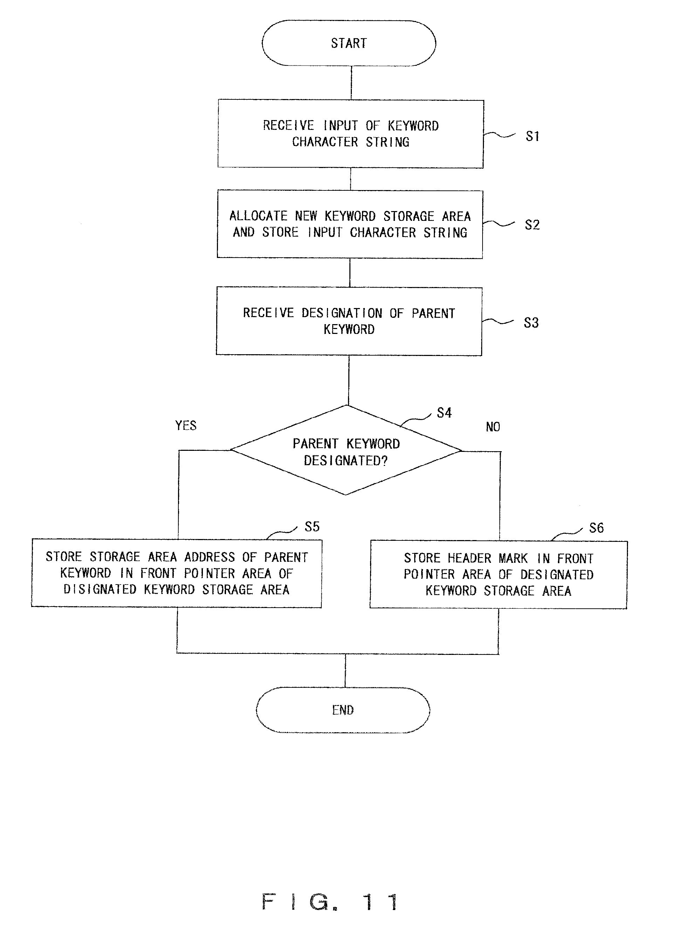

Fig. 11 is a flow chart of a process for setting an upper layer keyword's pointer in the keyword tree edit function F1. First, step S1 receives a character string input for setting a keyword. Next, step S2 allocates a keyword storage area for storing a file's attribute information, and for setting the input character string as a keyword and stores the character string input in S1. Step S3, receives a designation if a parent keyword of the input character string exists. Here a "parent keyword" is defined as a keyword existing on a layer directly above the existing layer in the keyword tree.

Upon determining a character string, which is to be set as a keyword, and its parent keyword, step S4 judges whether or not a parent keyword has been designated in the preceding process. If there has been a designation, the process proceeds to step S5 where the address of the designated parent keyword' s storage area is set as a pointer and the process ends. If there is judged to be no designation in step S4, then the keyword expressed by the input character string is determined to be the root keyword in the keyword tree, and a header mark is stored in the pointer area, and the process ends.

Note that the series of processes described above in step S1 through step S3 are configured to first determine the character string of a keyword to be set, and followed by determining which of the already set keywords the new keyword constituted by the character string is to be set under . The configuration is not limited as described above. An alternative configuration may include determining a parent keyword first, and then determining a character string.

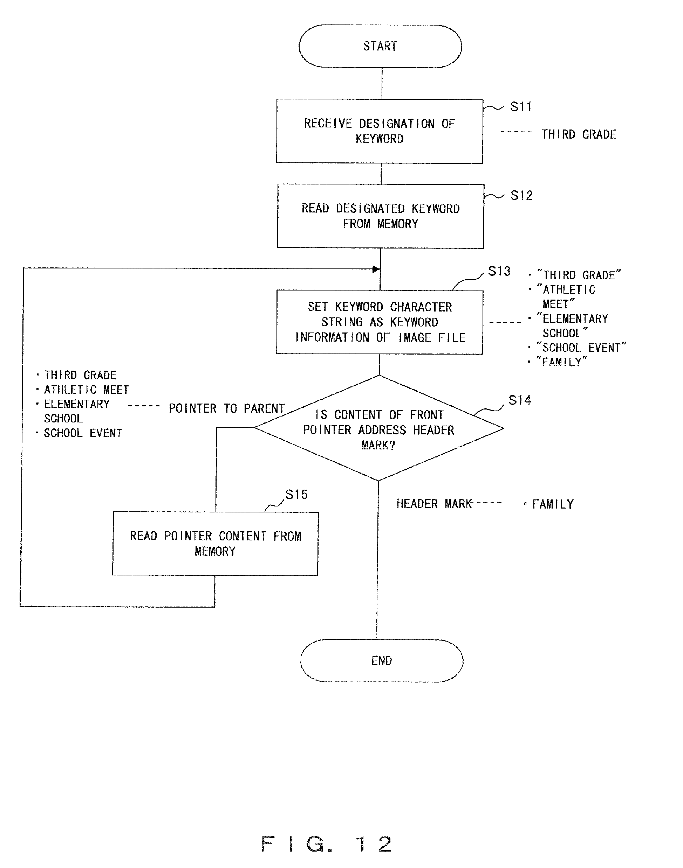

Fig. 12 is a flew chart of a process for referring to keywords that are associated with a designated keyword on layers above the designated keyword, and setting the keywords as attribute information to the files in the keyword setup function F2. First, step S11 receives a keyword designation from the user. The designated keyword in the present embodiment corresponds to "third grade". Step S12 reads the designated keyword "third grade" from memory. Next, step S13 sets the character string of the readout keyword "third grade" as keyword information to a file that is designated by the user, such as an image file. Then, step S14 refers to the value scored in the designated keyword' s (i.e., "third grade") pointer area and judges whether or not a header mark is stored. Here, since a header mark is not stored, an upper layer keyword exists. And step S15 reads an upper layer keyword from memory based on the pointer. In this example, "athletic meet" is read by referring to the keyword's (i.e., "third grade") pointer. Hereafter, a repetition of the processes step S13 through step S15 will result in setting a keyword's character stringe.g., "elementary school", "school event" and "family", one by one as keyword information to an image file designated by the user. In the embodiment, a header mark is stored in the pointer area of "family" when the step S14 judges the pointer area of the keyword "family" therefore the process is ended.

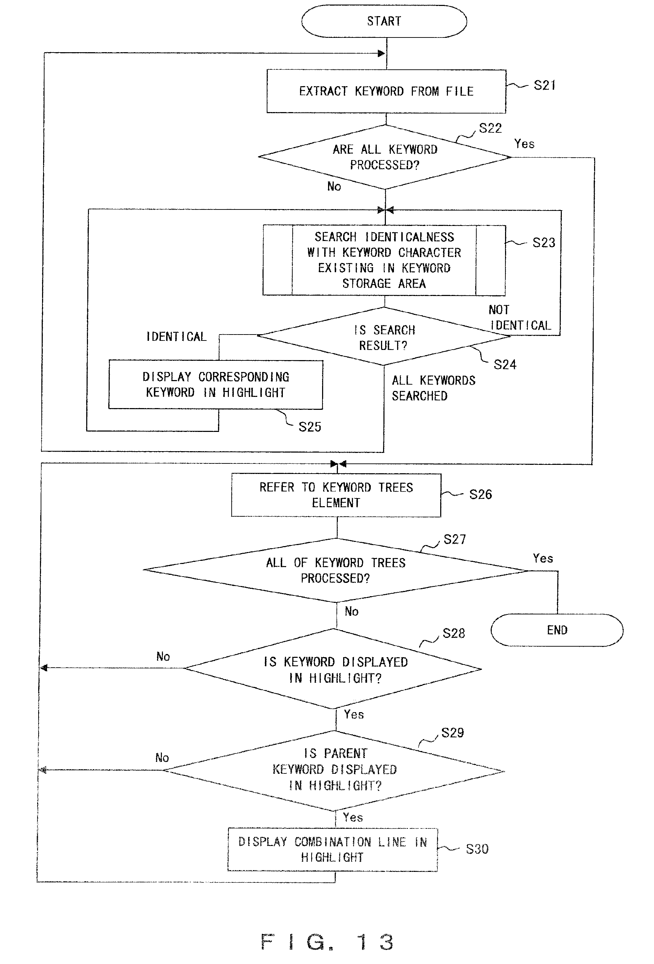

Fig. 13 is a flow chart of a process for displaying a highlighted keyword if the keyword that is identical with a keyword selected in one tree exists in one or more of a plurality of other keyword trees.

Step S21 obtains one keyword from a file' s keyword storage area. The obtained keyword is one designated by the user or a a keyword on a layer above the designated keyword and correlated with the designated keyword in a repeat process of the second time or thereafter. A keyword on one layer above is obtained one by one starting from the keyword designated by the user. Step S22 judges whether or not the search processes are completed for all of the existing keywords in the file' s keyword storage area. If they are not completed, then step S23 compares one of the extracted keywords to a keyword belonging to another keyword tree. In the embodiment, a search key K1 is compared to a keyword in tree TR1. In this step, for example, upper layer keywords, which are to be compared to the keyword in the file and indicated by the pointers are traced up and extracted to the root keyword one by one, A comparison in the step S23 is performed by employing a hash method or similar function.

In step S24 , if the two keywords are identical when compared in the step S23, then step S25 displays and highlights the identical keyword and the upper layer keywords that have been extracted in the step S23. Subsequently, the process returns to the step S23. If an identical keyword can not be obtained by searching in che step S23, then the process proceeds to the next keyword, i.e., to a keyword other than the one that was used in the step S23, from among the keywords contained in tree TR1 of the embodiment. Subsequently, the process returns to the step S23.

Upon completing the comparison of all of the keywords in the other keyword trees, the process returns from the step S24 to the step S21, and a keyword on a layer directly above the keyword, which is used in the step S23, is extracted by referring to the pointer. Thereafter, processes similar to those in steps S23 through S25 are repeated until the processes are completed up to the root keyword of the tree having keywords set to the file as keyword. Upon completing the process for all of keywords in the file, the process proceeds from the step S22 to the step S26.

StepS26 refers to individual keywords (i.e., keyword tree elements) contained in each keyword tree in all of the keyword trees. Step S27 judges whether or not the process is completed for all of the keyword elements. If it is not completed, the process proceeds to step S28 and the step S28 determines whether or not the keyword referred to in the step S26 is displayed and highlighted by the previous process (i.e., S25). If it is not displayed and highlighted, then the process returns to the step S26. If it is displayed and highlighted, then step S29 judges whether or not a parent keyword, i.e., a keyword on a layer directly above the existing layer, is displayed and highlighted. If the parent keyword is not displayed and highlighted, then the process returns to the step S26. If the parent keyword is displayed and highlighted, then the process proceeds to step S30. Then, a combination line between the keyword referred to in the step S26 and the parent keyword is displayed and highlighted. Subsequently the process returns to the step S26.

Keyword tree elements are referred to one after another. If the keyword tree element and the parent keyword are both displayed and highlighted, then the combination line between these keywords is displayed and highlighted one by one. The processes for all keyword tree elements have been completed, then the process ends . In the embodiment, keywords are extracted from a file by processes from the step S26 through the step S30, and a combination line between keywords is displayed and highlighted when the character string of a certain keyword, and it' s parent keyword, are identical to those included in another tree. As for the keyword search hit, the combination line between the hit keyword and a correlated keyword on a layer above the keyword is displayed and highlighted. As a result of carrying out the processes in Fig. 13, a screen is displayed on the monitor having the search results highlighted and displayed, as illustrated in Fig. 9.

Note that when searching a plurality of keyword trees via processes the step S21 through the step S25 in accordance with the flow chart of Fig. 13, a search is performed for keywords which are identical to the keyword designated by the user and the upper layer keyword in another keyword, and hit keyword(s) in the keyword search result, and keyword(s) above the hit keyword(s), are displayed and highlighted, but the configuration is not limited as such. An alternative configuration may search whether or not there exists a keyword that is identical to a keyword designated by the user within another keyword tree. Or, it may search whether or not there exists a keyword that is identical to the designated keyword in another tree, and display and highlight, one after another, the keywords above the hit keyword in the search result. It is desirable to enable the user to designate a method by providing a plurality of search methods and/or display methods to the user in the keyword management apparatus 1.

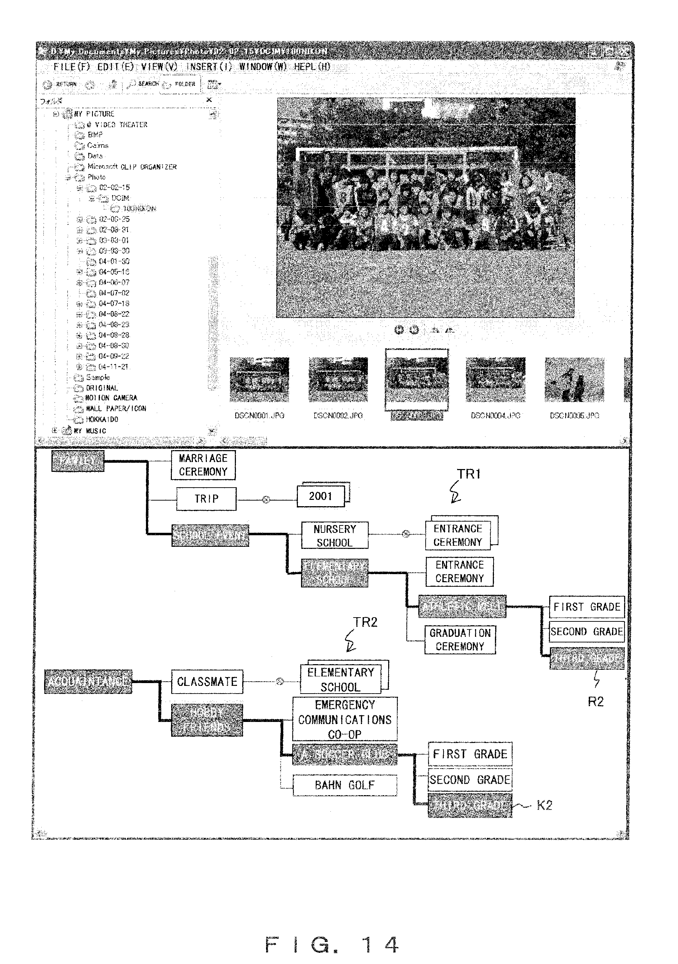

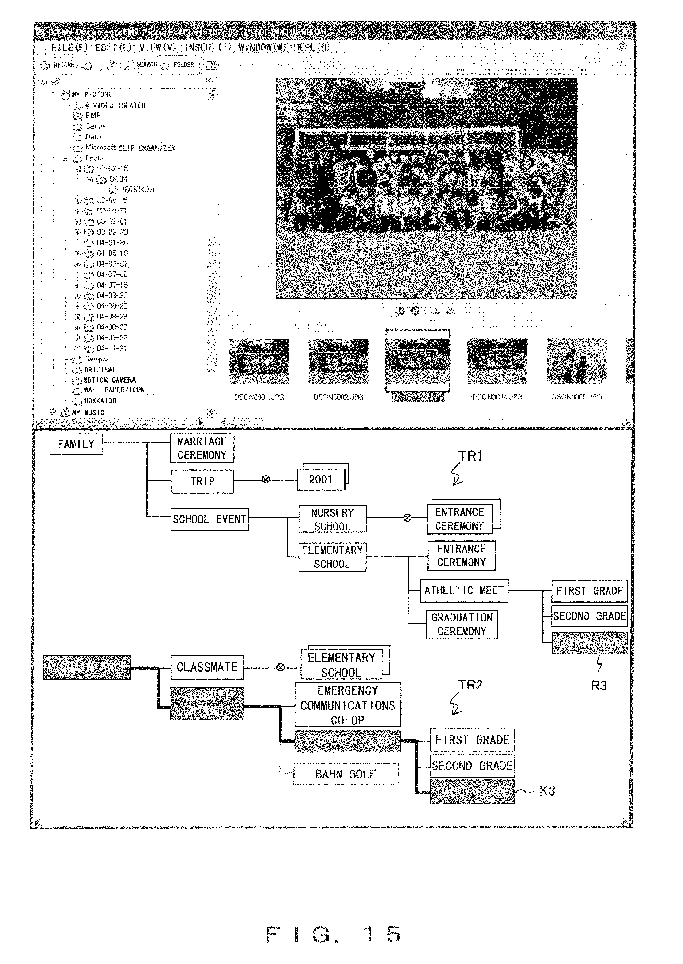

Figs. 14 and 15 show sample of display results corresponding to each search method.

Fig. 14 shows a case in which the designated keyword and keywords above the designated keyword are displayed and highlighted. Following this, a search of overlapping keywords in other keyword trees is done and keyword(s) that are hit by the search result, and the upper layer keywords of the hit keyword, are displayed and highlighted. The example of Fig. 14 shows a display screen of a search result when a user designates "third grade" from a keyword tree TR2 as search key K2. The keyword management apparatus 1 searches overlapping keywords of the search key K2 and keywords above the search key K2 e. g. , "A soccer club", "hobby friends" and "acquaintance"' in another keyword tree ,the keyword tree TR1. As a result of the search, only "third grade" is hit , and the search result R2, and the keywords above it--"athletic meet", "elementary school", "school event" and "family"--are displayed and highlighted.

Fig. 15 shows a case in which a designated keyword and keywords above the designated keyword are displayed and highlighted, after which overlapping keywords are searched for in another keyword tree. As a result of the search, only the hit keyword(s) are displayed and highlighted. The example of Fig. 15 shows a search result display screen where the user designates "third grade" from a keyword tree TR2 as a search key K3. The keyword management apparatus 1 searches for overlapping keywords of the search key K3 and keywords in layers above the search key K3 that are correlated with the search key K3 in a tree TR1. This is the same as the search method described by referring to Fig. 14. Only the keyword R3, which was obtained by the search results, is displayed and highlighted.

As described above, the present embodiment of the keyword management apparatus 1 is configured to set a keyword to each file. This keyword is set as attribute information for an image file or such after it is systematically preset in the form of a keyword tree. A plurality of keyword trees can be comprised, and there may be keywords than overlap in another keyword tree. Even if an overlap occurs, an overlapping keyword can be searched in a plurality of keyword trees, and the search result can be displayed in a method desired by the user. By using the displayed search result, the user is able to confirm whether or not a keyword that is just about to be input is set in an appropriate position in the tree and whether it is an appropriate word to be set as a keyword, or an appropriate keyword to be selected when a keyword is set to a file. This configuration makes it easy to manage what keywords are set to a file.

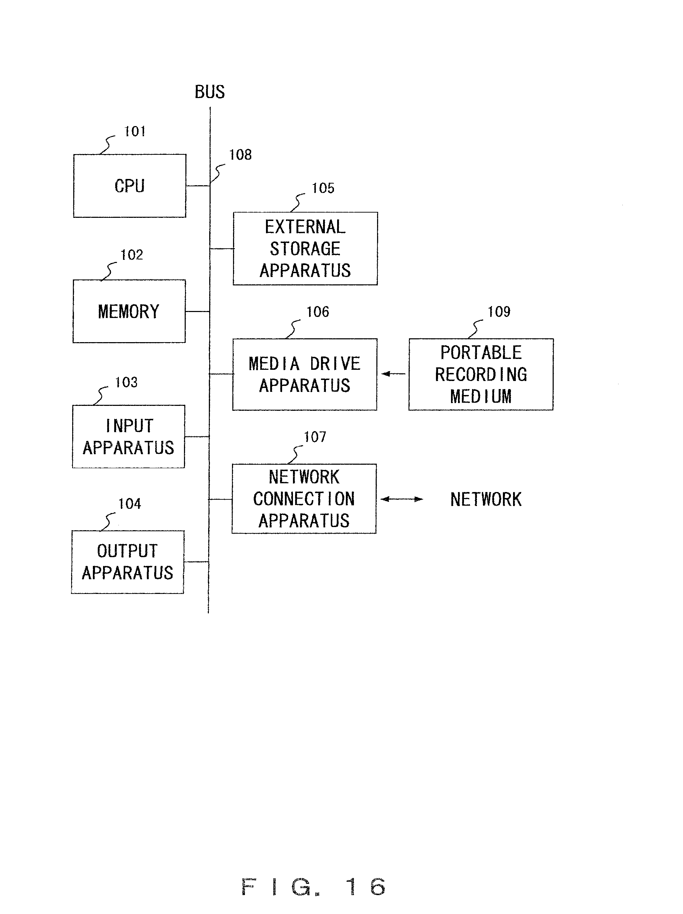

As shown in Fig. 16, the present embodiment of the keyword management apparatus 1 can be composed by an information processing apparatus, such as a computer. The information processing apparatus shown in Fig. 16 comprises a central processing unit (CPU) 101, a memory 102, an input apparatus 103, an output apparatus 104, an external storage apparatus 105, a media drive apparatus 106, and a network connection apparatus 107; wherein, these components can be interconnected by a bus 108.

The memory 102may include read only memory (ROM), random access memory (RAM), or a similar form of memory that is capable of storing a program for a process and data such as a keyword and an image file, etc. The CPU 101 executes the program by utilizing the memory 102, thereby performing the necessary process.

As shown in Fig. 1, the keyword database 16 and file database 17 of the keyword management apparatus 1 correspond to the memory 102. Meanwhile, the tree creation unit 11, the designation unit 12, the search unit 13, the display unit 14, and the keyword setup unit 15 correspond to a function that is implemented by executing the program stored in the memory 102.

The input apparatus 103 may include a keyboard, a pointing device, a touch panel, or similar device that can be used to input information and instructions from the user . The output apparatus 104 may include a display, a printer, a speaker, or similar device that can be used to output the inputted content of a keyword tree as designated by the user, a correlation between a file and a key word, a search result of an overlapping keyword, or similar information.

The external storage apparatus 105 may include a magnetic disk apparatus, an optical disk apparatus, a magneto optical disk apparatus, a tape apparatus, or similar storage means. The information processing apparatus pre-stores the above described program and data on an external storage apparatus 105, and use the program and data by loading them onto the memory 102 as required.

The media drive apparatus 106 drives a portable recording medium 109 and accesses the recording contents thereof. The portable recording medium 109 is a discretionary computer readable recording medium such as a memory card, flexible disk, CD-ROM (compact disk-read onlymemory), optical disk, or magneto optical disk. The user pre-stores the program and data on a portable recording medium 109 and uses them by loading them onto memory 102 as required.

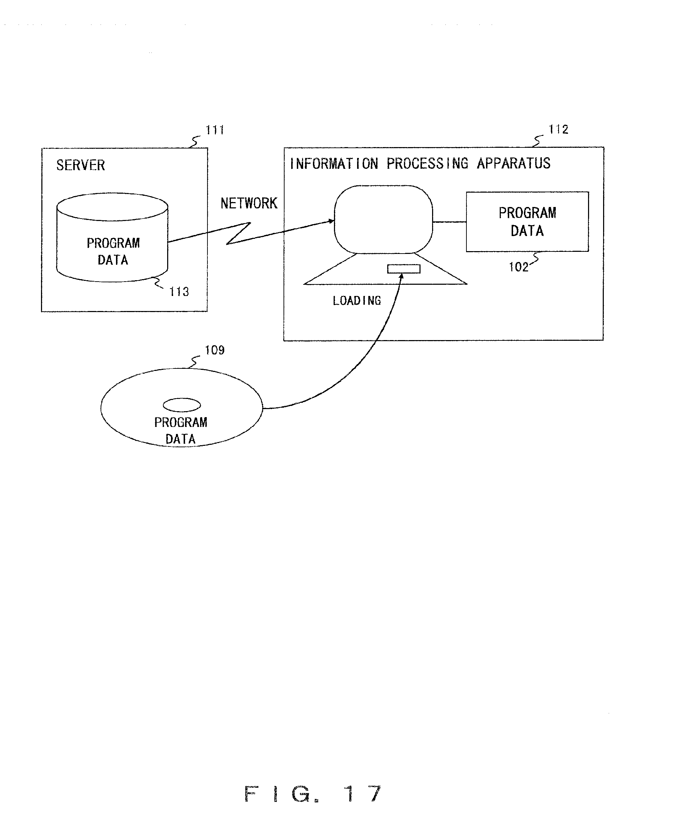

Fig. 17 shows a computer readable recording medium capable of supplying a program and data to the information processing apparatus shown in Fig. 16. The program and data that are stored on the portable recording medium 109, or a server' s 111 database 113, are loaded onto the memory 102 of the information processing apparatus 112. The server 111 generates a carrier signal for carrying the program and data, and transmits the information to an information processing apparatus 112 via a discretionary transmission medium on a network. The CPU 101 executes the program by using the data, thereby performing the necessary process.

## Claims

1. A keyword management apparatus for managing a relationship among a plurality of keywords used to search a file, comprising:
a storage unit for storing a plurality of keywords and hierarchical relationship information, defining a hierarchical relationship among the keywords;
a creation unit for creating a plurality of keyword trees by utilizing the hierarchical relationship information;
a designation unit for designating a first keyword, belonging to a first keyword tree, by referring to the storage unit;
a search unit for searching for a second keyword corresponding to the first keyword and belonging to a second keyword tree, and for a keyword on a layer above the second keyword obtained on the basis of the hierarchical relationship information, by referring to the storage unit; and
a display unit for displaying a search result of the search unit.

2. The keyword management apparatus according to claim 1, wherein
the display unit displays the first keyword tree highlighting the first keyword and displays the second keyword tree highlighting said the keyword searched by the search unit.

3. The keyword management apparatus according to claim 2, further comprising
a setup unit for, when a keyword is selected from the first and second keyword tree which are displayed by the display unit, as one to be set to a certain file, setting the selected keyword and a keyword on a layer above the selected keyword obtained on the basis of the hierarchical relationship information to the certain file.

4. The keyword management apparatus according to claim 3, wherein
the certain file is comprised of an image file.

5. The keyword management apparatus according to claim 1, wherein
the hierarchical relationship information is comprised of storage destination information of a keyword which exists on an immediate upper layer and which is correlated with each keyword.

6. The keyword management apparatus according to claim 5, wherein
the storage destination information is comprised of a physical address storing the keyword existing on the immediate upper layer.

7. A keyword management apparatus for managing a relationship among a plurality of keywords used to search a file, comprising:
a storage unit for storing a plurality of keywords and hierarchical relationship information defining a hierarchical relationship among the keywords;
a creation unit for creating a plurality of keyword trees by utilizing the hierarchical relationship information;
a designation unit for designating a first keyword belonging to a first keyword tree by referring to the storage unit; a search unit for searching, from a second keyword tree, for a second keyword corresponding to the first keyword or a keyword on a layer above the first keyword; and
a display unit for displaying the search result of the search unit.

8. The keyword management apparatus according to claim 7, wherein
the display unit displays, as a search result, a keyword obtained by a result of a search and a keyword on a layer above the keyword sequentially obtained on the basis of the hierarchical relationship information.

9. The keyword management apparatus according to claim 8, wherein
the display unit displays the first keyword tree highlighting the keyword designated by the designation unit, the keyword on the layer above the designated keyword, and the second keyword tree highlighting the keyword searched by the search unit.

10. A keyword management program for managing a relationship among a plurality of keywords used to search a file, wherein the program makes a computer execute the processes comprising:
storing a plurality of keywords and hierarchical relationship information defining a hierarchical relationship among the keywords;
creating a plurality of keyword trees by utilizing the hierarchical relationship information; designating a first keyword belonging to a first keyword tree;
searching for a second keyword corresponding to the first keyword and belonging to a second keyword tree, and for a keyword on a layer above the second keyword obtained on the basis of the hierarchical relationship information; and
displaying a search result.

11. A keyword management program for managing a relationship among a plurality of keywords used to search a file, wherein the program makes a computer execute the processes, comprising:
storing a plurality of keywords and hierarchical relationship information defining a hierarchical relationship among the keywords;
creating a plurality of keyword trees by utilizing the hierarchical relationship information;
designating a first keyword belonging to a first keyword tree;
searching, from a second keyword tree, for a second keyword corresponding to the first keyword or a keyword on a layer above the first keyword; and
displaying a search result.

12. A keyword management method for managing a relationship among a plurality of keywords used to search a file, comprising:
storing a plurality of keywords and hierarchical relationship information defining a hierarchical relationship among the keywords;
creating a plurality of keyword trees by utilizing the hierarchical relationship information;
designating a first keyword belonging to a first keyword tree; searching for a second key word corresponding to the first keyword and belonging to a second keyword tree, and for a keyword on an layer above the second keyword obtained on the basis of the hierarchical relationship information; and
displaying a search result.

13. A keyword management method for managing a relationship among a plurality of keywords used to search a file, comprising:
storing a plurality of keywords and hierarchical relationship information defining a hierarchical relationship among the keywords;
creating 13 plurality of keyword trees by utilizing the hierarchical relationship information;
designating a first keyword belonging to a first keyword tree;
searching, from a second keyword tree, for a second keyword corresponding to the first keyword or a keyword on a layer above the first keyword; and
displaying a search result.
